# EUROPÄISCHE PATENTSCHRIFT

(11) **EP 3 062 008 B1**
(45) Veröffentlichungstag und Bekanntmachung des Hinweises auf die Patenterteilung: **12.12.2018**
(21) Anmeldenummer: 16157474.4
(22) Anmeldetag: 25.02.2016
(51) Int. Cl.: F16L 21/08, F16L 23/024, F16L 37/084

(54) **MUFFE FÜR DRUCKROHR**
SLEEVE FOR PRESSURE PIPE
MANCHON DE TUBE DE PRESSION

(30) Priorität: 25.02.2015 DE 202015100900 U
(43) Veröffentlichungstag der Anmeldung: 31.08.2016
(73) Patentinhaber: Firma Norbert Schütz GmbH & Co. KG, 87737 Boos (DE)
(72) Erfinder: Schütz, Norbert, 87737 Boos (DE)
(74) Vertreter: Pfister & Pfister Patent- und Rechtsanwälte

(56) Entgegenhaltungen:
- AT-B- 372 769
- DE-A1-102012 105 399
- US-A1- 2012 274 063

## Beschreibung

Die Erfindung betrifft eine Muffe für den Anschluss an ein Rohr bzw. Druckrohr.

Herkömmliche Rohre oder Druckrohre werden in der Regel mit einem Flansch versehen, über den eine Verbindung zweier benachbarter Druckrohre erfolgen kann. Hierbei werden die Flansche miteinander verschraubt, nachdem ggfs. ein Dichtelement zwischen den Flanschen bzw. Rohrendstücken eingelegt wurde. Diese Art der Montage erweist sich als zeit- und kostenaufwändig und ist dabei aufgrund der zahlreichen Schraubverbindungen störanfällig.

Eine Weiterentwicklung stellen flanschlose Steckmuffe- und Schubsicherungssysteme dar, die hohen inneren wie äußeren Drucken standhalten. Diese Systeme sind zudem leicht zu montieren. Nachteilig bei bekannten Systemen erweist sich jedoch, dass eine Demontage einmal verbundener Rohre aufgrund der Schubsicherung nicht oder nur mit hohem Aufwand und selten zumindest bezüglich der Schubsicherung zerstörungsfrei durchgeführt werden kann.

Die AT 372 769 B zeigt eine Muffenverbindung mit einem geteilten Klemmring.

Aufgabe der vorliegenden Erfindung ist es daher, diesen Stand der Technik zu verbessern und insbesondere eine einfach zu demontierende Verbindung, für mit einer Schubsicherung ausgestattete Druckrohre, zur Verfügung zu stellen.

Zur Lösung dieser Aufgabe schlägt die Erfindung eine Muffe für den Anschluss an ein Rohr vor, wobei die Muffe ein Muffengehäuse mit einem Gehäusegrundkörper aufweist, das eine Schubsicherung aufnimmt, und die Schubsicherung in einer Funktionsstellung der Muffe durch mindestens zwei Halte- und Anschlagringsegmente in dem Muffengehäuse festgelegt ist und der Gehäusegrundkörper die Halte-und Anschlagringsegmente trägt oder dass mindestens eine ring- oder ringsegmentartige Halteplatte vorgesehen ist, die mit dem Gehäusegrundkörper verbindbar ist und die Halte- und Anschlagringsegmente zwischen dem Gehäusegrundkörper und der Halteplatte angeordnet sind.

Es werden mehrere alternative Varianten für die Befestigung der Halte- und Anschlagringsegmente vorgeschlagen. Neben einer direkten Befestigung der Halte- und Anschlagringsegmente an dem Gehäusegrundkörper sind auch mittelbare Varianten vorgesehen, wobei zum Beispiel eine separate Halteplatte eingesetzt wird. Aber auch hier gibt es eine Vielzahl verschiedener Varianten.So kann die Halteplatte in einer ersten Ausgestaltung ringförmig sein und bereits auf dem Rohr bzw. der Muffe axialverschieblich aufgesetzt sein, um dann, in der Montagestellung, gegen die Halte- und Anschlagringsegmente, in einer axialen Bewegung (jeweils entlang der Längsachse der Muffe), angestellt zu werden.

Der Pfiff der Erfindung liegt darin, dass an Stelle eines im Stand der Technik bekannten Halte- und Anschlagringes mindestens zwei Halte- und Anschlagringsegmente vorgesehen sind, die die Schubsicherung in dem Gehäusegrundkörper festlegen. Im Stand der Technik wurde die Schubsicherung durch einen Halte- und Anschlagring montiert, der im Demontagefall nur in axialer Richtung (bezogen auf die Längsachse der Muffe) von der Schubsicherung bzw. dem Gehäusegrundkörper entfernbar war. Üblicherweise verkeilte sich der Halte- und Anschlagring bei der Montage, um die Schubsicherung sicher zum Einsatz zu bringen und eine sichere Verbindung des Rohres mit der Muffe zu ermöglichen, weswegen dessen Demontage oftmals unmöglich oder nur unter Zerstörung der gesamten Muffenverbindung, der Schubsicherung oder dem Abschneiden des Rohres möglich war.

Dabei erlauben die erfindungsgemäß vorgeschlagenen Halte- und Anschlagringsegmente, die zusammen wiederum einen Halte- und Anschlagring bilden können, aber nicht bilden müssen, zunächst eine unabhängige Demontage voneinander und insbesondere auch ein seitliches Entfernen derselben, um die üblicherweise einstückig ausgebildete Schubsicherung in axialer Richtung (bezogen auf die Längsachse der Muffe) bewegen zu können. Da die Schubsicherung ja in axialer Richtung wirkt, sind hohe Haltekräfte rechtwinklig hierzu nicht vorgesehen, was die Demontage erleichtert. Die Halte-und Anschlagringsegmente sind leicht entfernbar, und die, die Schubsicherung in axialer Richtung quetschenden oder klemmenden Elemente kommen leicht von der Schubsicherung frei.

Über diesen Weg kommt dann die Schubsicherung in axialer Richtung frei und ermöglicht es, das in der Montagestellung eingesteckte, festgehaltene Rohr bzw. Druckrohr dann mit geringen Kräften zu bewegen bzw. aus der Muffe zu demontieren.

Es ist nicht nur grundsätzlich eine zerstörungsfreie Demontage mit dem erfindungsgemäßen Vorschlag möglich, sondern die einzelnen Bauteile können auch bei engen Platzverhältnissen leichter gehandhabt werden, was die Arbeit einerseits erleichtert, und andererseits auch beschleunigt.

Dabei ist vorgesehen, dass die Halte- und Anschlagringsegmente entweder unmittelbar oder mittelbar, also mit anderen klemmenden oder haltenden Elementen an dem Gehäusegrundkörper befestigt sind.

Im Rahmen dieser Anmeldung wird von einer Funktionsstellung bzw. einer Montagestellung der Muffe gesprochen, hierunter ist folgendes zu verstehen:
Als Funktionsstellung wird der normale Einsatz einer Muffe verstanden, bei welchem die Muffe mit einem Rohr verbunden ist, also gemäß einer Muffe eingesetzt wird. Üblicherweise wird hierbei von der Muffe eine Schubsicherung und ein dichter Anschluss an das Rohr erwartet. Die Offenbarung dieser Beschreibung umfasst dabei auch alle Einsatzbereiche einer Muffe, zum Beispiel zum Verbinden zweier Rohrstücke oder der Anordnung eines Flansches an die Muffe, die an ein Rohr angebaut wird.

Als Montagestellung wird hierzu der Zustand der Muffe verstanden, während diese mit dem Rohr verbunden wird, also montiert oder auch demontiert wird. Üblicherweise ist die Montagestellung nicht die Funktionsstellung, da es bei Montagestellung nicht um die Dichtheit der Rohrverbindung geht, die dort erst hergestellt wird.

Die Schubsicherung ist ringartig und insbesondere einstückig ausgebildet. Sie ist im Stand der Technik hinlänglich bekannt. Die Schubsicherung besteht aus elastischem Material, üblicherweise dem gleichen Material wie Dichtungen, also aus Elastomeren oder ähnlichem. Sie hat auch abdichtende Aufgaben. Die Schubsicherung trägt eine Mehrzahl von Verriegelungselementen, die sich in der Funktionsstellung schubfest in dem Rohr verkrallen.

Die Begriffe "Halte- und Anschlagringsegment/e", "Halte- und Anschlaghalbring" und "Halte- und Anschlagring" werden in dieser Anmeldung synonym verwendet. Oftmals wird in der Funktionsstellung von dem Halte-und Anschlagring gesprochen, der, wie erfindungsgemäß vorgegeben ist, aus mindestens zwei Halte- und Anschlagringsegmenten gebildet ist. In der Funktionsstellung tritt die Befestigungsaufgabe des Halte- und Anschlagringes für die Schubsicherung in den Vordergrund, wogegen in der Montagestellung die durch die segmentartige Ausgestaltung erheblich erleichterte Montage bzw. Demontage dominiert.

Des Weiteren ist in dem Vorschlag vorteilhafter Weise vorgesehen, dass in der Montagestellung der Muffe die Halte- und Anschlagringsegmente in einer, bezogen auf die Längsachse der Muffe radialen Bewegung an die Schubsicherung anstellbar bzw. entfernbar sind. Als radiale Bewegung wird hierbei bereits eine Bewegung mit radialen Bewegungsanteilen (jeweils bezogen auf die Längsachse der Muffe) verstanden. Hier tritt der wesentliche Vorteil der Erfindung bereits zu Tage, da für das Anstellen oder Entfernen der Halte- und Anschlagringsegmente nur geringe Haltekräfte überwunden werden müssen. Die im Stand der Technik bekannten Befestigungsringe schränkten die Beweglichkeit erheblich ein, da diese nur in einer axialen Bewegung zu montieren bzw. demontieren waren. Der erfindungsgemäße Vorschlag bietet hier deutlich mehr Freiheitsgrade und erleichtert erheblich die Montage bzw. Demontage.

Bei einer bevorzugten Ausgestaltung des Vorschlags ist vorgesehen, dass in der Funktionsstellung der Innendurchmesser des von den Halte- und Anschlagringsegmenten gebildeten Halte- und Anschlagringes geringer ist wie der Innendurchmesser des Gehäusegrundkörpers.

Durch diese Ausgestaltung ist gewährleistet, dass in der Montagestellung der Halte- und Anschlagring die Schubsicherung radial nach innen schiebt bzw. drückt, in Richtung auf das zu haltende bzw. abzudichtende Rohr. Durch die mehrteilige Ausgestaltung des Halte-und Anschlagringes ist eine Montage bzw. Demontage in überwiegend radiale Richtung (bezogen auf die Längsachse der Muffe) problemlos möglich, wodurch das elastische Material der Schubsicherung entsprechend gegen das eingeschobene Rohr gedrückt wird. Sind die Segmente relativ zur Schubsicherung angelegt, werden diese mit weiteren Befestigungsmitteln, wie diese später noch beschrieben werden, festgelegt und gesichert.

Des Weiteren ist vorgesehen, dass in der Funktionsstellung der Halte- und Anschlagring in axialer Richtung aus mehreren, insbesondere mindestens zwei Ringschichten besteht. Es ist bei diesem Vorschlag klar, dass verschiedene Halte- und Anschlagringsegmente vorgesehen sind, die jeweils einen unterschiedlichen oder auch gleichen Innenradius aufweisen können und somit eine leichte Anpassbarkeit der Muffe, zum Beispiel an unterschiedliche Typen von Schubsicherungen, die sich zum Beispiel in ihrer Profilausgestaltung, Breite oder Höhe, unterscheiden können, ermöglicht. Geschickterweise wird dabei eine Auswahl von verschiedenen Halte-und Anschlagringsegmenten, einerseits mit unterschiedlichen Ringdicken und andererseits mit unterschiedlichen Radien vorgehalten, wodurch insbesondere auf der Baustelle unterschiedlichen Begebenheiten flexibel begegnet werden kann.

Es ist ein weiterer Aspekt des Vorschlages, dass diese Anordnung ein Baukastenprinzip für die individuelle Ausstattung einer entsprechenden Muffe zur Verfügung stellt.

In einer vorteilhaften Ausgestaltung ist vorgesehen, dass in der Funktionsstellung der Halte- und Anschlagring auf der Innenseite einen Absatz aufweist. Als Innenseite wird hierbei die bezüglich der Muffenlängsachse radial innen liegende Seite verstanden. Die Ausführung dieses Absatzes führt dazu, dass ein Bereich geschaffen wird, dessen Innendurchmesser etwas größer ist und in der Funktionsstellung, also in der Einbausituation, Raum zur Verfügung stellt, in dem das elastische Material der Schubsicherung gezielt ausweichen kann.

Für die Ausgestaltung dieses Absatzes bestehen mehrere verschiedene Realisierungsvarianten. Zunächst ist es möglich, den Absatz an einem einstückigen Halte- und Anschlaghalbring, zum Beispiel durch eine formgebende Bearbeitung (Stanzen oder Fräsen) zu realisieren. Bei einem mehrschichtigen Aufbau, also einem Aufbau, bei welchem der Halte- und Anschlagring in der Funktionsstellung aus mehreren unterschiedlichen Ringschichten besteht, ist geschickterweise vorgesehen, dass die am Gehäusegrundkörper anliegende oder zugewandte Ringschicht einen kleineren Innendurchmesser aufweist, als die auf der ersten Ringschicht aufliegende zweite Ringschicht. So stellt in dem Muffengehäuse der Bereich der Ringschicht mit dem kleineren Innendurchmesser den die Schubsicherung überwiegend klemmenden bzw. festhaltenden Bereich dar, wogegen die Ringschicht mit dem etwas größeren Innendurchmesser eine Aufnahmetasche für das elastische Material der Schubsicherung zur Verfügung stellt. Natürlich ist es auch möglich, den Aufbau in axialer Richtung umzudrehen oder einen Aufbau mit einer Mehrzahl unterschiedlicher Ringschichten zu ermöglichen, die sich zum Beispiel im Bezug auf ihre Innendurchmesser schichtweise unterscheiden mögen.

Geschickter Weise ist vorgesehen, dass in der Funktionsstellung der Halte- und Anschlagring, im Schnitt gesehen, keilförmig ist und der Bereich des keilförmigen Halte- und Anschlagringes mit dem größeren Innendurchmesser dem Gehäusegrundkörper zugewandt ist. Natürlich ist vorgesehen, dass die Halte-und Anschlagringsegmente keilförmig ausgebildet sind. Das Profil der Schubsicherung ist im Schnitt gesehen nicht gleich dick, sondern weist Bereiche auf, die größere und kleinere radiale Dicke besitzen. Bei der vorgeschlagenen Einbausituation befindet sich bei dem keilförmig ausgebildeten Halte-und Anschlagring der Bereich des Halte-und Anschlagringes mit dem kleineren Innendurchmesser auf der dem Gehäusegrundkörper abgewandten Seite, wodurch sich ein Klemmrand für das Festhalten des nutartigen Bereiches der Schubsicherung ergibt, deren tropfenartige Profilgestaltung (im Schnitt gesehen) sich dann in den sich ausweitenden Keilbereich ausbreitet. Die keilförmige Ausgestaltung hat den Vorteil, dass sich das elastische Material der Schubsicherung in dem ergebenden Raum nach Bedarf zur Ausgleichung der Druckunterschiede verteilen kann, und durch die Ausgestaltung des Keiles auch entsprechende Befestigungskräfte eingeprägt werden können.

In einer anderen Variante wird eine ringsegmentartige Halteplatte vorgeschlagen, d.h., die Halteplatte besteht aus einer Mehrzahl ringsegmentartiger Elemente, die zusammen, gemeinsam eine die Muffenlängsachse umschließende Halteplatte realisieren. Dieser segmentartige Aufbau beinhaltet natürlich wieder die variable Montagemöglichkeit, die eine De-/Montage, auch in schwierigen Einbausituationen, erheblich erleichtert.

Die Erfindung zeichnet sich durch einen sehr flexiblen Aufbau aus. Dies wird zum Beispiel auch bei der Befestigung der Halteplatte an dem Gehäusegrundkörper deutlich. Im Rahmen dieser Anmeldung bedeutet hierbei der Begriff Halteplatte einerseits eine ringartige Ausgestaltung, andererseits eine aus mehreren Ringsegmenten gebildete, mehrteilige Halteplatte.

Ein weiterer Aspekt der Erfindung betrifft eine Muffe für den Anschluss an ein Rohr, wobei die Muffe ein Muffengehäuse mit einem Gehäusegrundkörper aufweist, das eine Schubsicherung aufnimmt, und die Schubsicherung in einer Funktionsstellung der Muffe durch einen Halte- und Anschlagring oder mindestens zwei Halte- und Anschlagringsegmente in dem Muffengehäuse festgelegt ist und mindestens zwei ringsegmentartige Halteplatten vorgesehen sind, die mit dem Gehäusegrundkörper verbindbar sind und die Halte- und Anschlagring/-segmente zwischen dem Gehäusegrundkörper und der Halteplatte angeordnet sind.

Die wesentlichen Vorteile der aus mehreren Elementen, ringsegmentartig gebildeten Halteplatte (die in dieser Anmeldung aufgeführt sind), lassen sich auch auf eine allgemeine Ausgestaltung einer Muffe, oder, ganz allgemein bei der Verbindung von Rohrstücken im Rohrbau übertragen. Die Anmelderin behält es sich insofern vor, auch für einen solchen Gegenstand eigenständigen Schutz zu suchen. Dem sachkundigen Fachmann ist es hierbei auch klar, dass die Ausgestaltung einer Muffe im allgemeinen so ausgeführt sein kann, wie in dieser Anmeldung beschrieben, wobei insbesondere die Ausgestaltung aller Varianten des Halte-und Anschlagringes (einstückig oder aus Segmenten), wie auch die beschriebene Ausgestaltung der Halteplatte ebenfalls hiervon umfasst ist.

So ist zum Beispiel vorgesehen, dass die (ringartige oder ringsegmentartige) Halteplatte mit Schrauben mit dem Gehäusegrundkörper verbunden ist. Hierbei werden eine Mehrzahl von Schrauben eingesetzt, um in bewährter und bekannter Weise die Halteplatte am Gehäusegrundkörper zu befestigen. Dabei weist der Gehäusegrundkörper in einer Mehrzahl von Öffnungen je ein Gewinde auf, oder die Schrauben werden mit entsprechenden Muttern befestigt. Dabei wirken diese Befestigungsmittel in (bezogen auf die Muffenlängsachse) axialer Richtung.

In einer alternativen Ausgestaltung ist vorgesehen, dass die Halteplattensegmente einen Haltekragen aufweisen, der in der Funktionsstellung zumindest einen Teil des Gehäusegrundkörpers formschlüssig umgreifen. Mit diesem Vorschlag ist eine sehr schnelle De-/Montage der Muffe realisierbar. An dem Gehäusegrundkörper ist zum Beispiel ein Rand oder ein Überstand vorgesehen, der mit einem Haltekragen des Halteplattensegmentes zusammenwirkt. Die Befestigung der Schubsicherung mit den Halteplattensegmenten ist dabei so ausgebildet, dass mindestens zwei Halteplattensegmente vorgesehen sind, die möglichst entlang des gesamten Umfanges die Schubsicherung sicher im Gehäusegrundkörper festlegen. Der Vorteil der ringsegmentartigen Ausgestaltung der Halteplatte, und der damit verbundenen Mehrteiligkeit, liegt darin, dass die bei der De-/Montage notwendigen Elemente wiederum in einer überwiegend radialen Bewegung (bezogen auf die wovon Längsachse) an den Ort der Montage herangeführt werden und so eine sehr flexible De-/Montage, auch in schwierigen Einbau- oder Montagesituationen, möglich ist.

Der Haltekragen ist zum Beispiel als Aufnahmenut, Hinterschneidung oder als Aufnahmetasche ausgebildet, der entsprechend zumindest ein Teil des Gehäusegrundkörpers formschlüssig umgreift. In einer bevorzugten Ausgestaltung ist zum Beispiel vorgesehen, dass der Gehäusegrundkörper umlaufend einen entsprechenden flanschartigen Überstand aufweist und auch der Haltekragen der Halteplattensegmente eine am Segmentrand verlaufende Aufnahmenut oder Aufnahmetasche hierfür aufweist. Dadurch ist eine sehr flexible, lageunabhängige Montage möglich. Hierauf ist der erfindungsgemäße Vorschlag aber nicht beschränkt, es können auch diskrete Elemente an dem Gehäusegrundkörper einerseits und/oder dem Halteplattensegment andererseits vorgesehen sein, wodurch sich eine eindeutige Positionierung der Bauteile zueinander erreichen lässt.
Insbesondere ist es hierbei geschickt, dass auch die Halteplatte segmentiert, also aus mindestens zwei Teilen besteht, wodurch sich eine hohe Montageflexibilität ergibt. Um aus den einzelnen Segmenten die gesamte Halteplatte zu bilden, werden die Segmente durch mindestens ein Befestigungsmittel miteinander verbunden. Ein solches Befestigungsmittel ist zum Beispiel eine Schraube, die mit einer entsprechenden Mutter oder einem Gewinde verbindbar ist. Bei einer einfachen Variante besteht dabei die Halteplatte aus zwei Halteplattensegmenten, die an einer Seite durch ein Scharnier miteinander verbunden sind und an der anderen, offenen Seite durch die beschriebene Schraubverbindung zueinander festgelegt werden. Dieser Vorschlag eignet sich auch dazu, einen Schnellverschluss zu realisieren, da nur eine sehr geringe Anzahl von Befestigungsmitteln zu betätigen sind.

In einer vorteilhaften Ausgestaltung ist vorgesehen, dass mindestens ein Befestigungsmittel die Halteplattensegmente in radialer Richtung zueinander fixiert. Die Halteplattensegmente werden in einer, bezogen auf die Längsachse der Muffe, zumindest radialen Bewegung gegen den Gehäusegrundkörper angestellt. Das Befestigungsmittel hält dann die beiden (es können auch mehrere sein) Halteplattensegmente in radialer Richtung. Da die Halteplattensegmente mit einem Haltekragen ausgestattet sind, der mit entsprechenden Elementen des Gehäusegrundkörpers formschlüssig zusammenwirkt, ist auch eine Befestigung in axialer Richtung (bezogen auf die Muffenlängsachse, auch unter Entfaltung einer entsprechenden axialen Befestigungskraft) problemlos möglich, dies hängt letztendlich von der konischen oder angewinkelten Struktur des Überstandes einerseits und des Haltekragens andererseits ab.

Durch ein steckbares Befestigungsmittel wird des weiteren erheblich Zeit bei der Montage bzw. Demontage gespart. Dabei ist zum Beispiel auf den Halteplattensegmenten im Randbereich des jeweiligen Segmentrandes je ein entsprechender Halteknopf vorgesehen. Ein in sich etwas federndes, U-förmig ausgebildetes Befestigungsmittel wird dann auf die beiden Halteknöpfe seitlich aufgeschoben. Durch eine entsprechende Ausgestaltung der Schenkel des U-förmigen Befestigungsmittels ist auch ein Einschnappen oder Sicherung möglich.

Es wurde bereits ausgeführt, dass die Schubsicherung eine Mehrzahl von Verriegelungselementen trägt und in der Funktionsstellung der Halte- und Anschlagring radial außen an den Verriegelungselementen angeordnet ist. Durch eine solche Ausgestaltung wird erreicht, dass die bei der Montage der Halte-und Anschlagringsegmente sich ausbildenden radialen Kräfte direkt auf die Verriegelungselement wirken, die ihrerseits sich dann fest in das Material des Rohres einbeissen. Insbesondere ist dabei vorgesehen, dass die Verriegelungselemente axial auf der Höhe des Halte- und Anschlagringes liegen, die den kleinsten Innendurchmesser aufweisen, und insbesondere über den inneren Rand des Gehäusegrundkörpers radial nach innen vorsteht.

Alternativ dazu ist vorgesehen, dass sich dieser Kranz von Verriegelungselementen in dem Bereich zwischen dem Gehäusegrundkörper und dem Bereich des Halte- und Anschlagringes mit dem kleinsten Innendurchmesser befindet und dort zum Beispiel durch die keilförmige Ausgestaltung des Halte- und Anschlagringes in der Funktionsstellung eine radiale Anstellung gegen das Rohr erfährt.

Des Weiteren ist günstiger Weise vorgesehen, dass die Schubsicherung einen wulstartig ausgebildeten Dichtteil aufweist, der in der Funktionsstellung im Gehäusegrundkörper, unterhalb des Halte- und Anschlagringes angeordnet ist. Die Schubsicherung hat zwei Aufgaben. Zum einen legt sie die axiale Position des Rohres/Druckrohres gegenüber der Muffe fest und sorgt so für eine schubstabile Verbindung und andererseits bewirkt die Schubsicherung auch eine Abdichtung. Diese beiden Aufgaben sind in der Schubsicherung vorteilhafterweise nicht an gleicher Stelle, sondern in axialer Richtung (bezogen auf die Längsachse der Muffe in Funktionsstellung) versetzter Stelle zueinander realisiert. So ist zum Beispiel vorgesehen, dass sich der Kranz von Verriegelungselementen in der Schubsicherung in einem Bereich mit relativ geringer Wandstärke befindet und darunter sich der wulstartige Dichtteil anschließt, der in der Funktionsstellung die Abdichtung des Gehäusegrundkörpers zum Rohr gewährleistet.

Es ist aber auch möglich, dass sich der Kranz von Verriegelungselementen alternativ in dem wulstartigen Dichtteil der Schubsicherung befindet.

Vorteilhafter Weise ist vorgesehen, dass der Gehäusegrundkörper am Muffenrohrstück fest angeordnet ist oder der Gehäusegrundkörper mehrteilig ausgebildet ist, und aus einem, am Muffenrohrstück fest angeordneter Basiskörper und einer Muffengehäuseverlängerung besteht, und die Muffengehäuseverlängerung in der Funktionsstellung fest mit dem Basiskörper verbindbar ist.

Durch den mehrteiligen Aufbau des Gehäusegrundkörpers ist eine flexible Anpassung des Muffengehäuses an den jeweiligen Anwendungszweck leicht realisierbar. So kann zum Beispiel mit einem Gehäusegrundkörper durch den Einsatz der Muffengehäuseverlängerung, mit wenigen Bauteilen unterschiedliche Typen von Muffengehäuse realisiert werden, die zum Beispiel in den durch die Verlängerung zur Verfügung gestellten Platz zusätzliche Sicherungselemente oder Dichtungen aufnimmt.

Es ist ein weiterer Aspekt des Vorschlages, dass diese Anordnung ein Baukastenprinzip für die individuelle Ausstattung einer entsprechenden Muffe zur Verfügung stellt.

So ist es zum Beispiel insbesondere möglich, dass an der Muffe eine von der Schubsicherung getrennte, zusätzliche Dichtung vorgesehen ist.

Die eingangs gestellte Aufgabe wird im übrigen auch durch das nachfolgend beschriebene System für das lösbare Verbinden eines Rohres mit einer Muffe gelöst, wobei das Rohr in die Muffe eingeschoben ist, sich zwischen dem Rohr und der Muffe eine Schubsicherung für das Festlegen des Rohres in der Muffe befindet, und die Schubsicherung in der Muffe durch mindestens zwei Halte- und Anschlagringsegmente gehalten ist. Vorteilhafterweise ist die in dem System eingesetzte Muffe so ausgebildet und alternativ auch so weitergebildet, wie oben beschrieben.

Die eingangs beschriebene Aufgabe wird gelöst durch ein Druckrohr mit einer Schubsicherung und einem die Schubsicherung aufnehmenden Muffengehäuse. Dabei ist am Muffengehäuse wenigstens ein lösbar mit dem Muffengehäuse verbundenes Halteelement für die Schubsicherung vorgesehen. Durch Lösen von Halteelement und Muffengehäuse kann die Schubsicherung gelöst und/oder aus dem Muffengehäuse entnommen werden. Die Erfindung ermöglicht somit eine für die Schubsicherung zerstörungsfreie Demontage von Rohrverbindungen.

Als vorteilhaft erweist es sich, wenn das Halteelement wenigstens einen Halte- und Anschlagring und eine Halteplatte umfasst. Dieser kann auch als aus wenigsten zwei Segmenten gebildeter Halte- und Anschlaghalbring ausgebildet werden.

Eine weitere als günstig angesehene Ausführungsform sieht vor, dass das Halteelement wenigstens einen Halte- und Anschlagring, eine Muffengehäuseverlängerung, einen Keilring und eine Halteplatte umfasst.

In den Zeichnungen ist die Erfindung in Ausführungsbeispielen schematisch dargestellt. Es zeigt:
- Fig. 1a: eine Ausführungsform einer Rohrverbindung in dreidimensionaler Schnittdarstellung, gemäß dem erfindungsgemäßen System,
- Fig. 1b: eine Ausführungsform einer Halteplatte nach der Erfindung,
- Fig. 1c: eine Ansicht der Rohrverbindung nach Fig. 1a,
- Fig. 2a: eine Ausführungsform eines Halte- und Anschlaghalbrings nach der Erfindung,
- Fig. 2b: eine Seitenansicht nach Fig. 2b,
- Fig. 2c: Ausführungsbeispiel einer Schubsicherung,
- Fig. 2d: in einer Schnittdarstellung, ein Ausführungsbeispiel der erfindungsgemäßen Muffe,
- Fig. 3a: eine weitere Ausführungsform einer Rohrverbindung in perspektivischer Darstellung, gemäß dem erfindungsgemäßen System,
- Fig. 3b: eine weitere Ausführungsform einer erfindungsgemäßen Muffe in perspektivischer Schnittdarstellung,
- Fig. 3c: eine seitliche Schnittdarstellung nach Fig. 3b,
- Fig. 4a: eine weitere Ausführungsform einer Rohrverbindung in Schnittdarstellung, gemäß dem erfindungsgemäßen System,
- Fig. 4b: eine weitere Ausführungsform einer Rohrverbindung in perspektivischer Darstellung nach Fig. 4a,
- Fig. 5a: eine dreidimensionale Ansicht einer weiteren Ausführungsform der erfindungsgemäßen Muffe,
- Fig. 5b: eine Schnittansicht nach Fig. 5a,
- Fig. 6: eine Schnittansicht einer weiteren Ausführungsform der erfindungsgemäßen Muffe,

In den Figuren sind gleiche oder einander entsprechende Elemente jeweils mit den gleichen Bezugszeichen bezeichnet und werden daher, sofern nicht zweckmäßig, nicht erneut beschrieben. Die in der gesamten Beschreibung enthaltenen Offenbarungen sind sinngemäß auf gleiche Teile mit gleichen Bezugszeichen bzw. gleichen Bauteilbezeichnungen übertragbar. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiterhin können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

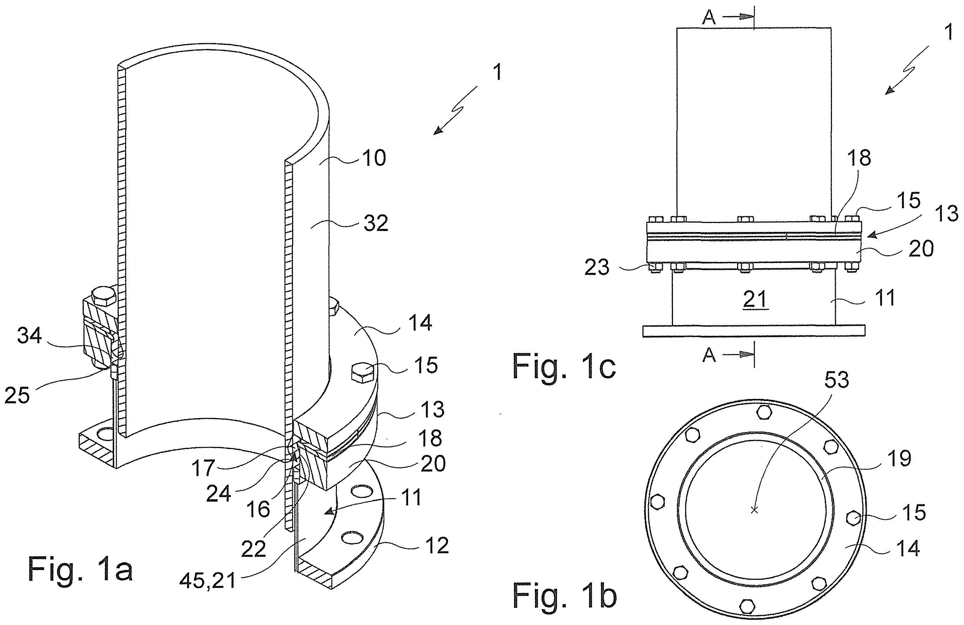

Figur 1 zeigt eine bevorzugte Ausführungsform einer Rohrverbindung 1. Hierbei ist mittels einer Steckverbindung ein Rohr 10 in eine Muffe 11 eingesteckt. Die Muffe 11 verfügt dabei über ein Muffengehäuse 13, das eine Schubsicherung 16 aufgenommen hat. Das Muffengehäuse 13 ist im Ausführungsbeispiel mehrteilig ausgeführt. So verfügt dieses über einen Gehäusegrundkörper 20, der sich in axialer Richtung an den die Muffe 11 bildenden Rohrabschnitt 21 anschließt und fest mit diesem verbunden ist. Der Gehäusegrundkörper 20 stellt eine Anlagefläche 22 für die Schubsicherung 16 zur Verfügung.

In axialer Richtung werden auf dem Gehäusegrundkörper 20 zwei Halte- und Anschlaghalbringe 18 aufgelegt, die zusammen einen Halte-und Anschlagring 18 bilden. Die hier gezeigten zwei Halte-und Anschlaghalbringe sind Halte- und Anschlagringsegmente im Sinne des Vorschlages. Der hierdurch gebildete Halte-und Anschlagring weist einen gegenüber dem Gehäusegrundkörper 20 verringerten Innendurchmesser auf und steht somit teilweise in die Schubsicherung 16 ein. Durch diesen Halte- und Anschlaghalbring 18 wird somit die Schubsicherung 16 in ihrer Position im Muffengehäuse 13 festgelegt.

Den Abschluss des Muffengehäuses 13 bildet die Halteplatte 14, im Ausführungsbeispiel als ringförmiges, in seinem Innendurchmesser dem Außendurchmesser des Rohres 10 entsprechendes Element ausgebildet. Die Halteplatte 14 wird über Flanschschrauben 15 mit dem Gehäusegrundkörper 20 verschraubt und legt dabei den Halte- und Anschlaghalbring 18 sowie die Schubsicherung 16 in ihrer Position in der Muffe 11 fest.

Zur Verbindung von Muffe 11 und Rohr 10 wird Letzteres in die Muffe 11 eingesteckt. Die Schubsicherung 16 ist dabei derart ausgebildet, dass diese die Längskraftschlüssigkeit sicherstellt. Die Schubsicherung verfügt über einen aus beispielsweise Gummi oder einem sonstigen elastisch verformbaren Material gebildeten Dichtteil 17. In diesen sind bevorzugt korrosionsbeständige Verriegelungssegmente 30, die beispielsweise aus Chromstahl hergestellt sind, einvulkanisiert.

Die Verriegelungssegmente 30 verfügen über keilförmig ausgebildete Zargen 31, die sich in der Oberfläche 32 des Rohres 10 verriegeln und Schubkräfte aufnehmen können.

Beim Verlegen des Rohres 10 unter Verwendung der Muffe 11 wird dabei wie folgt vorgegangen. Das einzusteckende Rohr 10 wird so weit in die Muffe 11 eingesteckt, bis es am Dichtteil 17 zentrisch anliegt. Durch zur Einschubrichtung entgegengesetztes Anziehen erfolgt dann die Verriegelung des Rohres 10 in der Muffe 11.

Soll die so gebildete Rohrverbindung 1 gelöst werden, so wird zunächst die Halteplatte 14 von der Muffe 11 abgeschraubt. Hierdurch wird die Schubsicherung 16 freigelegt. Nach Entnahme der Flanschschrauben 15 können der Halte- und Anschlaghalbring 18 bzw. dessen Ringsegmente 28a, 28b ebenfalls vom Gehäusegrundkörper 20 abgenommen werden. Dies erfolgt vorteilhafterweise in einer Bewegung, die radial (bzw. Bewegungsanteile in radialer Richtung) orientiert ist bezüglich der Muffenlängsachse 53. Hierzu sind nur geringe Kräfte aufzuwenden, gleichzeitig kann die Abbaubewegung sehr flexibel erfolgen, die radiale Haltekraft, die über die Halte- und Anschlagringsegmente 18, 28a, 28b auf die Verriegelungselemente 30 wirkt, wird somit aufgehoben.

Danach erfolgt eine vollständige Freigabe der Schubsicherung 16, insbesondere in Richtung der Muffenlängsachse 53. Aufgrund der Elastizität des Dichtteils 17 bzw. der Schubsicherung 16 können nunmehr die Zargen 31 in radiale Richtung entriegelt und das Rohr 10 aus der Muffe 11 gezogen werden. Weitere Hilfsmittel, wie beispielsweise ein Entriegelungsblech, sind somit nicht mehr zur Demontage notwendig.

Figur 1b zeigt eine Ausführungsform der Halteplatte 14. Diese weist an ihrem innenseitigen Umfang eine Nut 19 auf, die auf die Geometrie der Schubsicherung 16 abgestimmt ist und diese teilweise aufnimmt bzw. überdeckt. Die Halteplatte 14 ist im Ausführungsbeispiel als Flanschring ausgebildet und nimmt die Flanschschrauben 15 auf. Die Halteplatte 14 wird vor der Montage des Rohres 10 auf dieses aufgeschoben und nach Einschieben des Rohres 10 in die Muffe 11 mit dem Gehäusegrundkörper 20 des Muffengehäuses 13 verschraubt. Dabei werden die Schubsicherung 16 sowie die sonstigen Elemente der Muffe 11 in der Position fixiert und eine sichere und hoch druckfeste Verbindung zwischen Rohr 10 und Muffe 11 ausgebildet.

Figur 1c zeigt die Rohrverbindung 1 nach dem erfindungsgemäße System im Einbauzustand (in Funktionsstellung). Erkennbar ist hier zum einen die Muffe 11, die zusätzlich über einen Flanschring 12 verfügt, über den eine Anbindung der Muffe 11 an ein bestehendes Rohrsystem erfolgen kann. Das Muffengehäuse 13 verfügt über einen Gehäusegrundkörper 20, der als Auflage für die Muttern 23 der Flanschschrauben 15 und als Widerlager für diese dient. Auf dem Gehäusegrundkörper 20 liegen in axialer Richtung gesehen die Ringsegmente 28a, 28b des Halte- und Anschlaghalbrings 18 auf, der wiederum durch die den Abschluss der Muffe 11 bildende Halteplatte 14 in der Muffe 11 festgelegt wird. Der Gehäusegrundkörper 20 ist nach Art eines Flansches am Rohrabschnitt 21/Muffenrohrstück 45 der Muffe 11 angesetzt und weist einen gegenüber dem Muffeninnendurchmesser vergrößerten Innendurchmesser auf. Hierdurch wird ein Aufnahmeraum für das Dichtteil 17 der Schubsicherung 16 bzw. die Schubsicherung 16 selbst gebildet.

Das Dichtteil 17, das beispielsweise wulst- oder leistenartig ausgebildet ist, steht mit seinem Wulst 24 in diesen Freiraum 25 ein und kann bei Verbindung von Muffe 11 und Rohr 10 teilweise in diesen Freiraum einfließen. Dieses gewährleistet das elastische Material, aus dem das Dichtteil 17 gebildet ist. Im Wulst 24 sind auch die Verriegelungssegmente 30 eingeformt, insbesondere einvulkanisiert. Durch die elastische Verformung des Dichtteils 17 beim Einschieben des Rohres 10 in die Muffe 11 werden die Verriegelungssegmente 30 zunächst in Einschubrichtung gesehen nach außen gedrückt, so dass das Rohr 10 ohne nennenswerten Widerstand in die Muffe 11 eingleiten kann. Beim Anziehen des Rohres 10 in die zur Einschubrichtung entgegengesetzte Richtung richten sich die Verriegelungssegmente 30 auf und greifen in die Oberfläche 32 des Rohres 10 ein. Hierdurch wird das Herausrutschen des Rohres 10 aus der Muffe 11 wirksam verhindert, und eine längskraftschlüssige Verbindung zwischen Muffe 11, Schubsicherung 16 und Rohr 10 geschaffen.

Nach Festlegen der Halteplatte 14 am Muffengehäuse 13 wird eine dauerhafte und druckfeste, jedoch gleichzeitig bedarfsweise mit einfachen Mitteln lösbare Rohrverbindung 1 geschaffen.

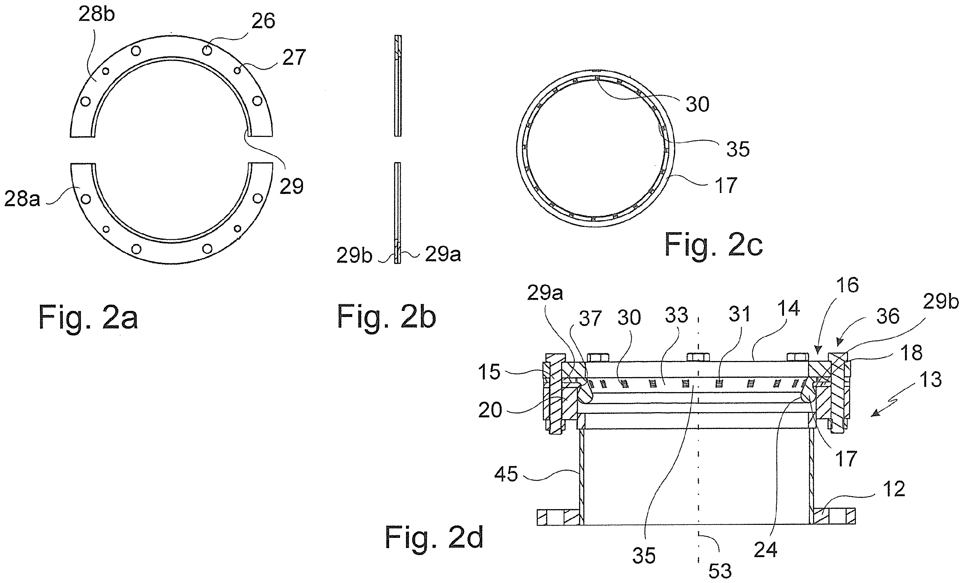

Figur 2a zeigt eine Ausführungsform des Halte- und Anschlaghalbrings 18 in Draufsicht. Dieser ist aus zwei Ringsegmenten 28 a, 28 b gebildet, ohne auf diese Anzahl beschränkt zu sein. Die beiden Ringsegmente 28a, 28b wiederum sind, wie aus Figur 2b erkennbar ist, zweischichtig aufgebaut. Die erste Ringschicht 29a weist dabei einen gegenüber der zweiten Ringschicht 29 b vergrößerten Innendurchmesser auf. Hieraus ergibt sich, dass die zweite Ringschicht 29b die erste Ringschicht 29a überdeckt und gegenüber dieser zum Zentrum des Ringsegmentes 28a, 28b hin vorspringt. Somit ergibt sich eine nutartige Ausgestaltung in den Ringsegmenten 28a, 28b. Der sich mithin ergebende Vorsprung, der auch gegenüber dem Gehäusegrundkörper 20 im Einbauzustand durchmessermäßig vorspringt steht dabei in eine muffenseitige Kerbung bzw. Hinterschneidung der Schubsicherung 16 bzw. des Dichtteils 17 ein. Im Einbauzustand wird hierdurch die Schubsicherung 16 in ihrer Lage im Muffengehäuse 13 fixiert.

Selbstverständlich besteht auch die Möglichkeit, dass der Halte-und Anschlaghalbring 18 aus einem Vollmaterial besteht und die am inneren Umfang vorgesehene Umfangsnut 29 in das Vollmaterial eingeschnitten, beispielsweise eingefräst, eingesenkt oder in sonstiger Art und Weise eingefügt wird.
Im Halte- und Anschlaghalbring 18 sind Bohrungen 26 vorgesehen, die von den Flanschschrauben 15 bei Montage durchgriffen werden. Zusätzlich hierzu weist der Halte- und Anschlaghalbring 18 Fixierbohrungen 27 auf, über die eine zusätzliche Festlegung der Ringsegmenten 28a, 28b am Muffengehäuse 13 erfolgen kann. Ist das jeweilige Ringsegment 28a, 28b aus zwei (oder mehr) Schichten aufgebaut, so kann über die Fixierbohrungen 27 auch eine Fixierung der Schichten aneinander vorgenommen werden.

Figur 2c zeigt eine Schubsicherung 16 in einer bevorzugten Ausführungsform. Die Schubsicherung 16 ist hier als Dichtring ausgebildet, der über ein Dichtteil 17 verfügt, das wulstartig ausgestaltet ist. An der inneren Umfangswand 33 sind die Verriegelungssegmente 30 angeordnet. Diese verfügen über mehrere, lamellenartig angeordnete Zargen 31 (vergleiche Figur 2d), die mit der Oberfläche 32, eines in die mit der Schubsicherung 16 ausgestatteten Muffe 11 eingeführten Rohres in Eingriff gebracht werden und eine längs-kraftschlüssige Verbindung herstellen. Die Schubsicherung 16 wird in den Gehäusegrundkörper 20 des Muffengehäuses 13 eingesetzt und liegt dort teilweise an der Innenwand 34 an. Die Schubsicherung 16 weist eine Abschrägung 35 auf, die ein Einführen des Rohres 10 erleichtert. Die Abschrägung 35 ist dabei entgegen der Einschubrichtung des Rohres 10 bevorzugt mit einem Winkel von 0 bis 85°, bevorzugt 10 bis 45° geneigt.

Figur 2d zeigt eine Ausführungsform der Rohrverbindung 1 mit einer Schubsicherung 16, die im Muffengehäuse 13 eingesetzt ist. Gut erkennbar sind hier die Verriegelungssegmente 30 sowie die Zargen 31. In der hier dargestellten Ausführungsform verfügt die Schubsicherung 16 über ein Dichtteil 17 mit einem Wulst 24, in den die Verriegelungselement 30 einvulkanisiert sind. Die Umfangswand 33 der Schubsicherung 16 ist dabei zum oberen Rand 36 der Muffe 11 hin nach außen geneigt und der Wulst 24 springt in Richtung des Zentrums der Muffe 11 vor. Die Schubsicherung 16 wird durch die Halte- und Anschlaghalbringe 18, dessen vorspringender Teil in eine muffenseitige Kerbung 37 einsteht in das Muffengehäuse 13 geklemmt. Die Kerbung 37 befindet sich dabei in Einbaustellung radial außerhalb der Verriegelungselemente 30. Dadurch ist ein Zurückweichen der Verriegelungssegmente 30 im Einbauzustand nicht möglich, vielmehr beißen sich dann die Verriegelungselemente 30 in dem einzuschieben Rohr 10 ein.

Eine weitere Fixierung der Position der Schubsicherung 16 wird durch die Halteplatte 14 erreicht, über die eine Klemmung der Schubsicherung 16 in der Muffe 11 sowie gegenüber dem Halte- und Anschlaghalbring 18 in axialer Richtung (bezüglich der Muffenlängsachse 53) erreicht wird.

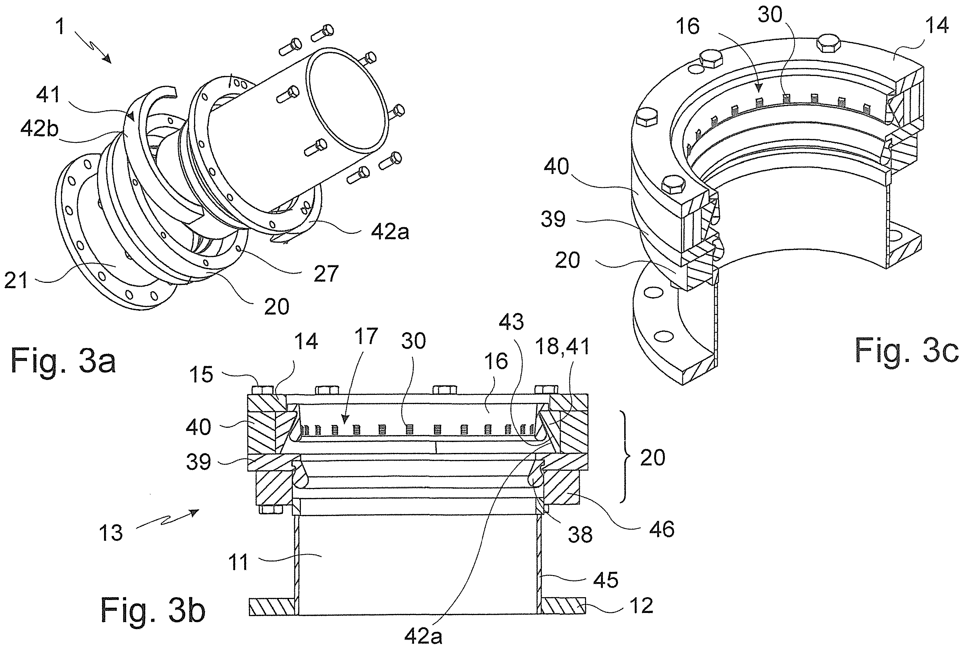

Figur 3a zeigt eine weitere Ausführungsform der Rohrverbindung nach dem erfindungsgemäßen System. Das Muffengehäuse 13 ist im Ausführungsbeispiel ebenfalls mehrteilig (insbesondere baukastenartig) ausgebildet. Ein Gehäusegrundkörper 20 weist dabei einen Basiskörper 46 auf, der mit dem Rohrabschnitt 21 /Muffenrohrstück 45 verbunden ist und stellt Bohrungen 27 zur Verfügung, über die eine Festlegung der Halteplatte 14 am Gehäusegrundkörper 20 bzw. dem Basiskörper 46 erfolgen kann.

Im Ausführungsbeispiel wurde bezüglich der Schubsicherung 16 ein ähnliches System verwendet wie im Zusammenhang mit den vorhergehenden Figuren beschrieben. Es unterscheidet sich aber etwas von dem Ausführungsbeispiel nach Figur 2d. In dem Ausführungsbeispiel nach Figur 2d befindet sich die Verriegelungselement 30 oberhalb des wulstartigartigen Dichtteils 17 der Schubsicherung 16. In den-Ausführungsbeispielen nach Figur 3b hingegen befinden sich die Verriegelungselemente 30 in dem wulstartigen Dichtteil 17, also nicht in dem dünneren oberen Teil der Schubsicherung 16.

Zusätzlich zu dem die Verriegelungssegmente 30 aufweisenden ringförmigen Element verfügt das vorliegende Ausführungsbeispiel über eine weitere Dichtng 38, die unterhalb, d.h. auf Höhe des Gehäusegrundkörpers 20 in der Muffe 11 eingesetzt ist und dort gehalten wird. Die eigentliche Schubsicherung 16 wird im Ausführungsbeispiel der Figur 3a durch ein zusätzliches, das Verriegelungselement 30 tragendes, ringförmiges Element gewährleistet, das oberhalb der Dichtung 38 in einer axialen Verlängerung des Gehäusegrundkörpers 20 angeordnet ist.

Für die Fixierung dieser Schubsicherung 16 ist ein Keilring 41 vorgesehen, der ebenfalls aus 2 Keilringsegmenten 42a, 42b, die sich zu dem Keilring ergänzen gebildet ist. Auch in diesem Ausführungsbeispiel verfügt die Rohrverbindung 1 über eine Halteplatte 14, die mit dem Gehäusegrundkörper 20 verschraubt wird und dabei die Position der einzelnen Elemente fixiert und das Muffengehäuse 13 abschließt.

Figuren 3b und 3c zeigen die im Zusammenhang mit Figur 3a beschriebene Rohrverbindung 1 in Schnittdarstellungen. Erkennbar ist hier die Trennung zwischen der Schubsicherung 16 einerseits und der Dichtung 38 andererseits. Der Keilring 41 stellt die Schubsicherung 16 gegenüber dem in die Muffe 11 einzusteckenden Rohr (nicht dargestellt) an und dient gleichzeitig zur Führung der Verformung beim Einschieben des Rohres 10. Über die keilförmigen Ringflächen 43, die bevorzugt eine Neigung von zwischen 1 und 85°, insbesondere 10 und 45° aufweist, wird die Schubsicherung 16 an die Oberfläche 32 des Rohres angedrückt und somit die Verriegelung zwischen Schubsicherung 16 und Rohr 10 gewährleistet.

Die untere Dichtung 38, die in einem zusätzlichen Zwischenring 39 des Muffengehäuses 13 aufgenommen ist, erfüllt im Ausführungsbeispiel eine zusätzliche Dichtfunktion, so dass die hier gezeigte Ausführungsform auch mit höheren anstehenden Drücken verwendet werden kann, ohne dass Leckagen auftreten.

In axialer Richtung schließt sich oberhalb des Zwischenrings 39, (der einstückig mit dem Basiskörper 46 verbunden sein mag, oder - nach Art einen Baukastens - lose aufgelegt ist) eine Gehäuseverlängerung 40 an, die den Keilring 41 umschließt und diesen gegenüber der Schubsicherung 16 abstützt. In dem hier gezeigten Ausführungsbeispiel wird der Gehäusegrundkörper 20 gebildet von dem Basiskörper 46, dem Zwischenring 49 und der Gehäuseverlängerung 40.

Abgeschlossen wird der gesamte Aufbau durch die Halteplatte 14, die mit der Gehäuseverlängerung 40 und dem Zwischenring 39 verschraubt wird. Der Zwischenring 39 wiederum ist mit dem Gehäusegrundkörper 20 verbunden, insbesondere verschraubt. Selbstverständlich besteht auch die Möglichkeit, dass die zur Festlegung der Halteplatte 14 verwendeten Flanschschrauben 15 durch die Halteplatte 14, die Gehäuseverlängerung 40 und den Zwischenring 39 geführt sind und im Gehäusegrundkörper 20 festgelegt werden. Die Verteilung der Flanschschrauben 15 in der Halteplatte 14 gewährleistet dabei eine gleichmäßige Verteilung der Anzugsmomente und somit eine entsprechende Festlegung der Einzelelemente der modular aufgebauten Muffe 11.

Der modulare Aufbau ermöglicht zum einen eine einfache und schnelle Montage und Herstellung der Rohrverbindung 1, zum anderen bringt die erfindungsgemäße Ausgestaltung des Muffengehäuses 13 Vorteile bei der Demontage. Anders als bei herkömmlichen Rohrverbindungen muss zur Demontage kein zusätzliches Werkzeug zur Verfügung gestellt werden, um den Eingriff zwischen der Schubsicherung 16, das heißt, den Verriegelungssegmenten 30 und dem in die Muffe eingesetzten Rohr 10 zu lösen. Stattdessen wird bei der Demontage zunächst die Halteplatte 14 vom Muffengehäuse 13 gelöst und je nach Ausführungsform zunächst die Gehäuseverlängerung 40 abgezogen. In Ausführungsbeispielen ohne Gehäuseverlängerung 40 kann nach Abnahme der Halteplatte 14 sofort eine Entfernung der Ringsegmente 28a, 28b bzw. der Keilringsegmenten 42a, 42b durchgeführt werden. Hierdurch wird die Klemmung zwischen Schubsicherung 16 und Rohr 10 entspannt und die Verriegelungssegmente 30 können somit aus ihrer Position am Rohr 10 leicht entnommen und eine Trennung von Rohr und Muffe 11 durchgeführt werden. Dies erfolgt bevorzugt zerstörungsfrei, d.h. die Schubsicherung 16 steht für die erneute Verwendung zur Verfügung sofern dies die Struktur der Verriegelungssegmente 30 zulässt.

Die wulst- oder lippenartige Ausgestaltung der Schubsicherung 16 bzw. des Dichtteils 17 stellt eine über den gesamten Umfang gleichmäßige Verbindung zwischen Rohr 10 und Schubsicherung 16 sicher. Die Geometrie der Schubsicherung 16 bzw. des Dichtteils 17 oder der Dichtung 38 mit abgeschrägten Flächen erleichtert das Einführen des Rohres 10 und stellt gleichzeitig ein vollflächiges Anliegen an dessen Umfangsfläche bzw. Oberfläche 32 sicher. Die keilförmige Gestaltung der Keilringsegmente 42a, 42b bzw. des vorspringenden Absatzes im Halte- und Anschlaghalbring 18 fixiert die Schubsicherung 16 in ihrer Position in der Muffe 11 und legt diese gleichzeitig am Rohr 10 an, da der Innendurchmesser am Angriffspunkt des Keils bzw. Vorsprungs nur geringfügig kleiner ist als der Außendurchmesser des Rohres 10, so dass hier zunächst ein Formschluss gegeben ist, wenn das Rohr in die Muffe 11 eingeführt wird. Die längskraftschlüssige Verbindung zwischen Rohr 10 und Schubsicherung 16 wird dann über die Verriegelungssegmente 30 vorgenommen.

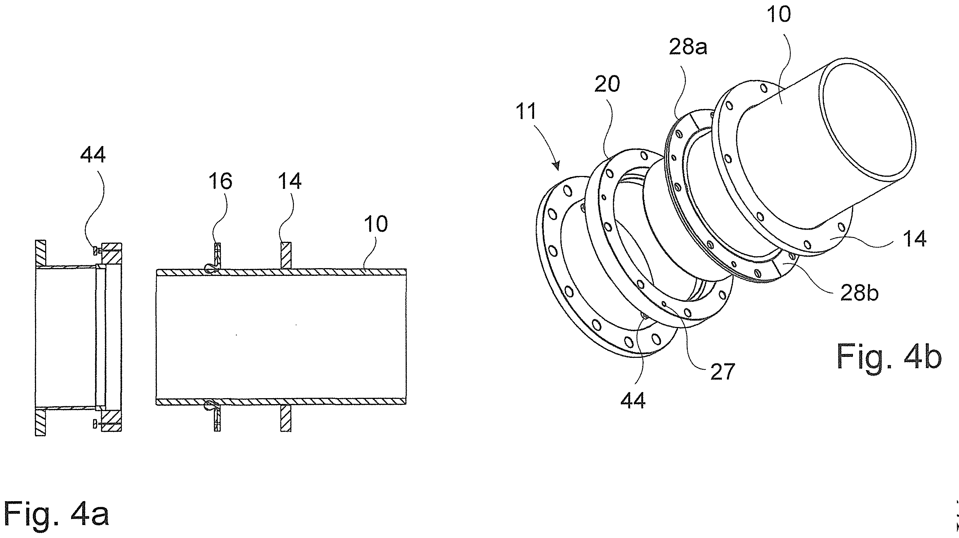

Figuren 4a und 4b zeigen weitere Ausführungsformen der Rohrverbindung 1 in Schnitt- bzw. perspektivischer Darstellung. Aus dieser Darstellung kann auch entnommen werden, wie eine Demontage der Rohrverbindung 1 durchgeführt wird. Nach Lösen der Flanschschrauben 15 und dem Zurückdrehen der optional vorgesehenen Fixierschrauben 44 kann das Muffengehäuse 13 getrennt werden. Dabei wird die Fixierung der Halte- und Anschlaghalbring 18 gelöst, worauf hin diese vom Rohr 10 und der Schubsicherung 16 abgenommen werden können. Hierdurch kommt es zur Entspannung bzw. zum Aufheben der Klemmung zwischen Schubsicherung 16 und Rohr 10. Das Rohr 10 kann somit ggfs. zusammen mit der Schubsicherung 16 aus der Muffe 11 entnommen und die Rohrverbindung somit aufgelöst werden. Figur 4b gezeigt perspektivisch die Einzelelemente der Rohrverbindung 1, die Muffe 11 mit Muffengrundkörper 20 und in diesem vorgesehenen Fixierbohrungen bzw. Fixierschrauben 44 für die Halte- und Anschlaghalbring 18 bzw. die Ringsegmente 28a, 28b und die Halteplatte 14. Die Fixierschrauben 44 dienen im Ausführungsbeispiel zur Verbindung von Gehäusegrundkörper 20 und Ringsegmenten 28a, 28b.

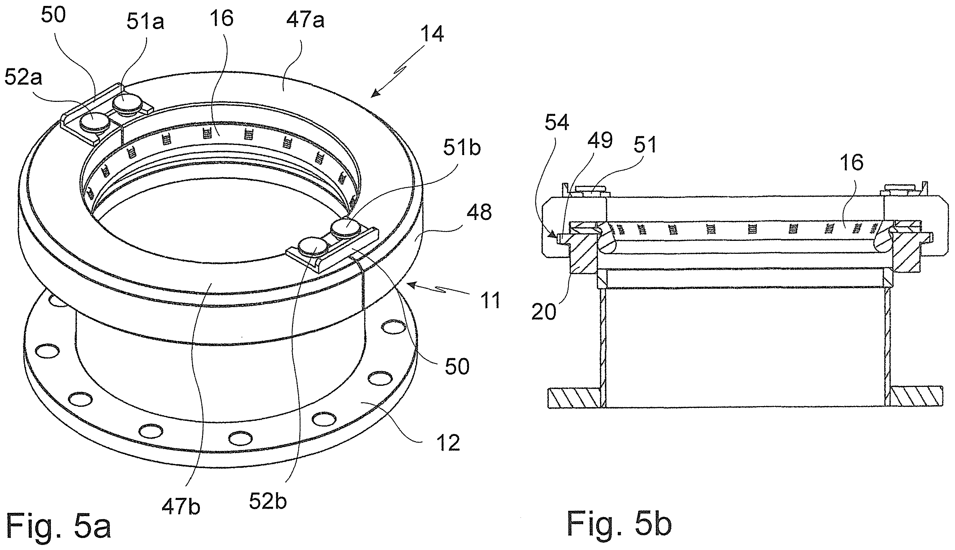

In Figur 5a ist, in einer perspektivischen Ansicht, eine weitere Ausgestaltung der erfindungsgemäßen Muffe 11 gezeigt. Hier ist insbesondere die Ausgestaltung der Halteplatte 14 von Interesse, die für die Befestigung und Festlegung des Halte- und Anschlagringes 18, bzw. deren Segmente 29 a und 29 b sowie der Schubsicherung 16 vorgesehen ist. Die Halteplatte 14 ist, in dem hier gezeigten Beispiel, aus Segmenten 47 a und 47 b gebildet. Sie besteht also aus mehreren Teilen. Diese Halteplattensegmente 47a und 47b sind als Halbringe vorgesehen und weisen an ihren Enden jeweils Halteknöpfe 51,51a, 51b, 52, 52a, 52b auf. Ein wesentlicher Vorzug dieser Ausgestaltung ist, dass die so vorgesehene Halteplatte 14 nicht, wie sonst üblich, in einer axialen Bewegung (bezogen auf die Muffenlängsachse 53) an das Muffengehäuse 13 angestellt werden müssen, sondern in einer beliebigen, insbesondere in einer radialen Bewegung montiert werden können, was die Montage bzw. Demontage erheblich erleichtert.

Die Anordnung ist dabei so gewählt (siehe Figur 5b), dass die Halteplattensegmente 47a, 47b, einen Haltekragen 48 aufweisen, der formschlüssig zumindest einen Teil des Gehäusegrundkörpers 20 umgreift. Hierzu besitzt zum Beispiel der Gehäusegrundkörper 20 einen umlaufenden Ring 49, der in eine Ringnut 54 der Halteplattensegmente 47a, 47b formschlüssig eingreift. Die Ringnut 54 ist Teil des Haltekragens 48.

Durch eine etwas konische Ausgestaltung der Nutwände der Ringnut 54 wird auch eine axiale Befestigungskraft (bezogen auf die Muffenlängsachse 53) realisiert.

Der Vorzug der segmentartigen Ausgestaltung der Halteplatte liegt bereits darin, dass die Montage erheblich vereinfacht wird, da das Hantieren der Halteplattensegmente 47a und 47b erleichtert wird, da eine Vielzahl von Freiheitsgraden jetzt zur Verfügung steht. Pfiffig ist in diesem Zusammenhang aber auch die Verbindung der beiden Halteplattensegmente 47a, 47b zu einer ringförmigen Halteplatte 14, da auch hier ein hoher Wert auf schnelle und einfache Bedienbarkeit und Montage gelegt wurde. Diese Halteplattensegmente 47a und 47b weisen an ihren Enden jeweils Halteknöpfe 51,51a, 51b, 52, 52a, 52b auf. Die Halteknöpfe 51, 52 unterschiedlicher Halteplattensegmente 47a und 47b werden je durch ein U-förmiges Befestigungsmittel 50 miteinander verbunden. Die U-förmigen Befestigungsmittel 50 werden dabei in einer bezogen auf die Muffenlängsachse 53 radialen Bewegung von außen auf die jeweiligen Halteknöpfe 51a, 52a einerseits, und 51b und 52b andererseits aufgeschoben, wodurch die beiden Halteplattensegmente 47 a und 47 b ebenfalls in radialer Richtung aufeinander zubewegt werden.

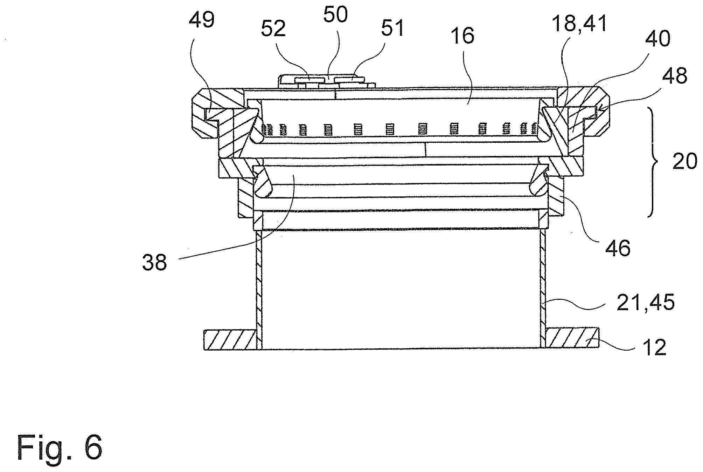

Die vorteilhaften Ausgestaltungen der Halteplatte 14 ist nicht nur bei relativ einfachen Muffengehäuse 13, wie in Figur zu 5a gezeigt, realisierbar, sondern in gleicher Weise auch bei, aus mehreren Elementen gebildeten Muffengehäuse 13 bzw. Gehäusegrundkörper 20 möglich (siehe Fig 6). In diesem Fall wirkt der Haltekragen 48 mit einem Haltering 49 der Gehäuseverlängerung 40 des Gehäusegrundkörpers 20 zusammen, wobei, wie bereits beschrieben, die Gehäuseverlängerung 40 zum Beispiel mit Schraubenverbindungen mit dem Basiskörper 46 verbunden ist. Es ist aber auch möglich, dass eine so ausgestattete Halteplatte 14 bzw. Halteplattensegmente 47a und 47b eine Mehrzahl von Elementen kraftschlüssig zusammenfasst und zusammenschließt.

Die Ausgestaltung der Halteplatte 14, wie beschrieben, einschließlich dem eingesetzten Befestigungsmittel 50, eignet sich nicht nur für die Verbindung der Schubsicherung 16 bzw. der Halte- und Anschlagringsegmente mit dem Gehäusegrundkörper 20 des Muffengehäuses 13, sondern kann allgemein zur Verbindung, insbesondere für eine Schnellverschluss-Verbindung für Rohre oder Rohrverbindungen aller Art im Rohrbau, usw eingesetzt werden.

Vorteil sämtlicher dargestellter Ausführungsformen ist es, dass bewährte Schubsicherungen 16 in Rohrverbindungen 1 verwendet werden können und durch die erfindungsgemäße Ausgestaltung eine einfache Demontage der Rohrverbindung 1 vorgenommen werden kann, ohne dass hierfür spezielle Zusatzwerkzeuge notwendig wären. Die Muffe 11 bzw. das Muffengehäuse 13 ist bei allen Ausführungsformen modular aus wenigstens einem, in der Regel zwei, drei oder vier einzelnen, lösbar miteinander verbundenen Teilen aufgebaut, über die eine Klemmung der Dichtung 38, des Dichtteils 17 und/oder der Schubsicherung 16 gewährleistet ist. Dies auch dann, wenn Dichtteil 17 und Schubsicherung 16 als ein Element, bzw. Dichtung 38 und Schubsicherung 16 als zwei voneinander getrennte Elemente zur Verfügung gestellt werden. Die erfindungsgemäße Konfiguration schafft auch Unabhängigkeit von der Muffengeometrie, da durch die modulare Bauweise ein Austausch einzelner Elemente zum Anpassen an ver-schiedene Dichtungen bzw. Schubsicherungen vorgenommen werden kann. Die Ausführungsformen, der hier dargestellten Rohrverbindungen, sind aufgrund der gewählten Dichtungen 38 bzw. Schubsicherungen 16 für Drücke von zwischen 0 und 40 bar verwendbar. Bei entsprechender Dimensionierung können selbstverständlich auch noch höhere Drücke in der Rohrverbindung anstehen und dennoch eine dauerhafte und dichte Verbindung zur Verfügung gestellt werden.

Die jetzt mit der Anmeldung und später eingereichten Ansprüche sind ohne Präjudiz für die Erzielung weitergehenden Schutzes.

Sollte sich hier bei näherer Prüfung, insbesondere auch des einschlägigen Standes der Technik, ergeben, dass das eine oder andere Merkmal für das Ziel der Erfindung zwar günstig, nicht aber entscheidend wichtig ist, so wird selbstverständlich schon jetzt eine Formulierung angestrebt, die ein solches Merkmal, insbesondere im Hauptanspruch, nicht mehr aufweist. Auch eine solche Unterkombination ist von der Offenbarung dieser Anmeldung abgedeckt.

Es ist weiter zu beachten, dass die in den verschiedenen Ausführungsformen beschriebenen und in den Figuren gezeigten Ausgestaltungen und Varianten der Erfindung beliebig untereinander kombinierbar sind. Dabei sind einzelne oder mehrere Merkmale beliebig gegeneinander austauschbar. Diese Merkmalskombinationen sind ebenso mit offenbart.

Die in den abhängigen Ansprüchen angeführten Rückbeziehungen weisen auf die weitere Ausbildung des Gegenstandes des Hauptanspruches durch die Merkmale des jeweiligen Unteranspruches hin. Jedoch sind diese nicht als ein Verzicht auf die Erzielung eines selbständigen, gegenständlichen Schutzes für die Merkmale der rückbezogenen Unteransprüche zu verstehen.

Merkmale, die nur in der Beschreibung offenbart wurden oder auch Einzelmerkmale aus Ansprüchen, die eine Mehrzahl von Merkmalen umfassen, können jederzeit als von erfindungswesentlicher Bedeutung zur Abgrenzung vom Stande der Technik in den oder die unabhängigen Anspruch/Ansprüche übernommen werden, und zwar auch dann, wenn solche Merkmale im Zusammenhang mit anderen Merkmalen erwähnt wurden beziehungsweise im Zusammenhang mit anderen Merkmalen besonders günstige Ergebnisse erreichen.

## Patentansprüche

1. Muffe für den Anschluss an ein Rohr, wobei die Muffe (11) ein Muffengehäuse (13) mit einem Gehäusegrundkörper (20) aufweist, das eine Schubsicherung (16) aufnimmt, und die Schubsicherung (16) in einer Funktionsstellung der Muffe (11) durch mindestens zwei Halte- und Anschlagringsegmente (18, 28a, 28b) in dem Muffengehäuse (13) festgelegt ist, **dadurch gekenneichnet, dass** die Halte- und Anschlagringsegmente (18, 28a, 28b) am Gehäusegrundkörper (20) befestigt sind, oder dass mindestens zwei ringsegmentartige Halteplatten (14) vorgesehen sind, die mit dem Gehäusegrundkörper (20) verbindbar sind und die Halte- und Anschlagringsegmente (28a, 28b) zwischen dem Gehäusegrundkörper (20) und der Halteplatte (14) angeordnet sind.

2. Muffe nach Anspruch 1, **dadurch gekennzeichnet, dass** in einer Montagestellung der Muffe (11) die Halte- und Anschlagringsegmente (18, 28a, 28b) in einer, bezogen auf die Längsachse (53) der Muffe (11) radialen Bewegung an die Schubsicherung (16) anstellbar bzw. entfernbar sind.

3. Muffe nach einem der vorherigen Ansprüche, **dadurch gekennzeichnet, dass** in der Funktionsstellung der Innendurchmesser des von den Halte- und Anschlagringsegmenten (28a, 28b) gebildeten Halte- und Anschlagringes (18) geringer ist wie der Innendurchmesser des Gehäusegrundkörpers (20).

4. Muffe nach einem der vorherigen Ansprüche, **dadurch gekennzeichnet, dass** in der Funktionsstellung der Halte- und Anschlagring (18) in axialer Richtung aus mehreren, insbesondere mindestens zwei Ringschichten (29a, 29b) besteht.

5. Muffe nach einem der vorherigen Ansprüche, **dadurch gekennzeichnet, dass** in der Funktionsstellung der Halte- und Anschlagring (18) auf der Innenseite einen Absatz aufweist.

6. Muffe nach Anspruch 4, **dadurch gekennzeichnet, dass** die am Gehäusegrundkörper (20) anliegende oder zugewandte Ringschicht (29b) einen kleineren Innendurchmesser aufweist wie die auf der ersten Ringschicht (29b) aufliegende zweite Ringschicht (29a) .

7. Muffe nach einem der vorherigen Ansprüche, **dadurch gekennzeichnet, dass** in der Funktionsstellung der Halte- und Anschlagring (18, 41), im Schnitt gesehen, keilförmig ist und der Bereich des keilförmigen Halte- und Anschlagringes (18, 41) mit dem größeren Innendurchmesser dem Gehäusegrundkörper (20) zugewandt ist.

8. Muffe nach einem der vorherigen Ansprüche, **dadurch gekennzeichnet, dass** mindestens eine ring- oder ringsegmentartige Halteplatte (14, 47a, 47b) vorgesehen ist, die mit dem Gehäusegrundkörper (20) verbindbar ist und die Halte- und Anschlagringsegmente (28a, 28b) zwischen dem Gehäusegrundkörper (20) und der Halteplatte (14) angeordnet sind.

9. Muffe nach einem der vorherigen Ansprüche, **dadurch gekennzeichnet, dass** die Halteplatte (14) mit Schrauben (15) mit dem Gehäusegrundkörper (20) verbunden ist.

10. Muffe nach einem der vorherigen Ansprüche, **dadurch gekennzeichnet, dass** die Halteplattensegmente (47a, 47b) einen Haltekragen (48) aufweisen, der in der Funktionsstellung zumindest einen Teil (49) des Gehäusegrundkörpers (20) formschlüssig umgreift.

11. Muffe nach einem der vorherigen Ansprüche, **dadurch gekennzeichnet, dass** mindestens ein Befestigungsmittel (50) die Halteplattensegmente (47a, 47b) in radialer Richtung zueinander fixiert.

12. Muffe nach einem der vorherigen Ansprüche, **dadurch gekennzeichnet, dass** die Schubsicherung (16) eine Mehrzahl von Verriegelungselementen (30) trägt und in der Funktionsstellung der Halte- und Anschlagring (18) radial außen an den Verriegelungselementen (30) angeordnet ist und/oder die Schubsicherung (16) einen wulstartig ausgebildeten Dichtteil (17) aufweist, der in der Funktionsstellung im Gehäusegrundkörper (20), unterhalb des Halte- und Anschlagringes (18) angeordnet ist und/oder an der Muffe (11) eine von der Schubsicherung (16) getrennte, zusätzliche Dichtung (38) vorgesehen ist.

13. Muffe nach einem der vorherigen Ansprüche, **dadurch gekennzeichnet, dass** der Gehäusegrundkörper (20) am Muffenrohrstück (45) fest angeordnet ist oder der Gehäusegrundkörper (20) mehrteilig ausgebildet ist, und aus einem, am Muffenrohrstück (45) festangeordneter Basiskörper (46) und einer Muffengehäuseverlängerung (40) besteht, und die Muffengehäuseverlängerung (40) in der Funktionsstellung fest mit dem Basiskörper (46) verbindbar ist.

14. System für das lösbare Verbinden eines Rohres (10) mit einer Muffe (11) nach einem der vorhergehenden Ansprüche, wobei das Rohr (10) in die Muffe (11) eingeschoben ist, sich zwischen dem Rohr (10) und der Muffe (11) eine Schubsicherung (16) für das Festlegen des Rohres (10) in der Muffe (11) befindet, und die Schubsicherung (16) in der Muffe (11) durch mindestens zwei Halte- und Anschlagringsegmente (28a, 28b) gehalten ist.

## Claims

1. Sleeve for connecting to a pipe, wherein the sleeve (11) has a sleeve housing (13) with a housing body (20) that holds a thrust-proof device (16), and in a functional position of the sleeve (11) the thrust-proof device (16) is defined in the joint housing (13) by at least two retaining and stop ring segments (18, 28a, 28b) in the sleeve housing (13), **characterized in that** the retaining and stop ring segments (18, 28a, 28b) are attached to the housing body (20), or that at least two ring segment-like retaining plates (14) are provided that can be connected to the housing body (20), and the retaining and stop ring segments (28a, 28b) are arranged between the housing body (20) and the retaining plate (14).

2. The sleeve according to claim 1, **characterized in that** in a mounting position of the sleeve (11) the retaining and stop ring segments (18, 28a, 28b) can be angled to the thrust-proof device (16) or removed in a movement that is radial with respect to the longitudinal axis (53) of the sleeve (11).

3. The sleeve according to one of the preceding claims, **characterized in that** in the functional position the interior diameter of the retaining and stop ring (18) formed by the retaining and stop ring segments (28a, 28b) is less than the interior diameter of the housing body (20).

4. The sleeve according to one of the preceding claims, **characterized in that** in the functional position the retaining and stop ring (18) consists in axial direction of several, in particular two ring layers (29a, 29b).

5. The sleeve according to one of the preceding claims, **characterized in that** in the functional position the retaining and stop ring (18) has a projection on its inside.

6. The sleeve according to claim 4, **characterized in that** the ring layer (29b) that is in contact or facing the housing body (20) has a smaller interior diameter than the second ring layer (29a) that rests on the first ring layer (29b).

7. The sleeve according to one of the preceding claims, **characterized in that** in the functional position, seen in section, the retaining and stop ring (18, 41) is wedge-shaped, and the area of the wedge-shaped retaining and stop ring (18, 41) with the larger interior diameter faces the housing body (20).

8. The sleeve according to one of the preceding claims, **characterized in that** at least one ring or ring segment-like retaining plate (14, 47a, 47b) is provided which can be connected to the housing body (20), and the retaining and stop ring segments (28a, 28b) are arranged between the housing body (20) and the retaining plate (14).

9. The sleeve according to one of the preceding claims, **characterized in that** the retaining plate (14) is connected to the housing body (20) by means of screws (15).

10. The sleeve according to one of the preceding claims, **characterized in that** the retaining plate segments (47a, 47b) have a retaining collar (48) encompassing in the functional position at least a part (49) of the housing body (20) in a positive-locking way.

11. The sleeve according to one of the preceding claims, **characterized in that** at least one fastening means (50) fixes the retaining plate segments (47a, 47b) to one another in radial direction.

12. The sleeve according to one of the preceding claims, **characterized in that** the thrust-proof device (16) carries a plurality of locking elements (30), and in the functional position the retaining and stop ring (18) is arranged radially on the outside at the locking elements (30), and/or the thrust-proof device (16) has a bead-like formed sealing part (17) arranged in the functional position in the housing body (20) below the retaining and stop ring (18), and/or at the sleeve (11) an additional seal (38) separated from the thrust-proof device (16) is provided.

13. The sleeve according to one of the preceding claims, **characterized in that** the housing body (20) is fixedly arranged at the sleeve pipe section (45), or the housing body (20) consists of several parts, i. e. of a basic body (46) fixedly arranged at the sleeve pipe section (45) and a sleeve housing extension (40), and the sleeve housing extension (40) can be connected fixedly to the basic body (46) in the functional position.

14. System for the releasable connection of a pipe (10) to a sleeve (11) according to one of the preceding claims, wherein the pipe (10) is introduced into the sleeve (11), between the pipe (10) and the sleeve (11) a thrust-proof device (16) is located for fixing the pipe (10) in the sleeve (11), and the thrust-proof device (16) is held in the sleeve (11) by at least two retaining and stop ring segments (28a, 28b).

## Revendications

1. Manchon pour le raccordement à un tuyau, dans lequel le manchon (11) présente une enveloppe de manchon (13) avec un corps de base d'enveloppe (20), qui intègre une protection anti-glissement (16), et la protection anti-glissement (16) est installée dans une position fonctionnelle du manchon (11) par le biais d'au moins deux segments de bague de retenue et de butée (18, 28a, 28b) dans l'enveloppe de manchon (13), **caractérisé en ce que** les segments de bague de retenue et de butée (18, 28a, 28b) sont fixés au corps de base d'enveloppe (20), ou **en ce qu'**au moins deux plaques de retenue de type segment de bague (14) sont prévues, lesquelles peuvent être reliées au corps de base d'enveloppe (20) et les segments de bague de retenue et de butée (28a, 28b) sont disposés entre le corps de base d'enveloppe (20) et la plaque de retenue (14).

2. Manchon selon la revendication 1, **caractérisé en ce que** dans une position de montage du manchon (11) les segments de bague de retenue et de butée (18, 28a, 28b) peuvent être installés sur la protection anti-glissement (16) ou en être enlevés dans un mouvement radial par rapport à l'axe longitudinal (53) du manchon (11).

3. Manchon selon l'une des revendications précédentes, **caractérisé en ce que** dans la position fonctionnelle le diamètre interne de la bague de retenue et de butée (18) formée par les segments de bague de retenue et de butée (28a, 28b) est plus petit que le diamètre interne du corps de base d'enveloppe (20) .

4. Manchon selon l'une des revendications précédentes, **caractérisé en ce que** dans la position fonctionnelle la bague de retenue et de butée (18) se compose dans la direction axiale de plusieurs, notamment d'au moins deux, couches de bague (29a, 29b) .

5. Manchon selon l'une des revendications précédentes, **caractérisé en ce que** dans la position fonctionnelle la bague de retenue et de butée (18) présente un socle sur la face interne.

6. Manchon selon la revendication 4, **caractérisé en ce que** la couche de bague (29b) reposant sur ou tournée vers le corps de base d'enveloppe (20) présente un diamètre interne plus petit que la deuxième couche de bague (29a) reposant sur la première couche de bagues (29b).

7. Manchon selon l'une des revendications précédentes, **caractérisé en ce que** dans la position fonctionnelle la bague de retenue et de butée (18, 41), vue en coupe, est cunéiforme et la zone de la bague de retenue et de butée cunéiforme (18, 41) avec le plus gros diamètre interne est tournée vers le corps de base d'enveloppe (20).

8. Manchon selon l'une des revendications précédentes, **caractérisé en ce qu'**au moins une plaque de retenue de type bague ou segment de bague (14, 47a, 47b) est prévue, qui peut être reliée au corps de base d'enveloppe (20) et les segments de bague de retenue et de butée (28a, 28b) sont disposés entre le corps de base d'enveloppe (20) et la plaque de retenue (14).

9. Manchon selon l'une des revendications précédentes, **caractérisé en ce que** la plaque de retenue (14) est reliée au corps de base d'enveloppe (20) par des vis (15).

10. Manchon selon l'une des revendications précédentes, **caractérisé en ce que** les segments de plaque de retenue (47a, 47b) présentent une collerette de retenue (48) qui saisit au moins une partie (49) du corps de base d'enveloppe (20) par complémentarité de formes dans la position fonctionnelle.

11. Manchon selon l'une des revendications précédentes, **caractérisé en ce qu'**au moins un moyen de fixation (50) fixe les segments de plaque de retenue (47a, 47b) les uns aux autres dans la direction radiale.

12. Manchon selon l'une des revendications précédentes, **caractérisé en ce que** la protection anti-glissement (16) porte une pluralité d'éléments de verrouillage (30) et est disposée dans la position fonctionnelle de la bague de retenue et de butée (18) radialement à l'extérieur au niveau des éléments de verrouillage (30) et/ou la protection anti-glissement (16) présente une partie d'étanchéité réalisée en forme de bourrelet (17) qui est disposée dans la position fonctionnelle dans le corps de base d'enveloppe (20), en dessous de la bague de retenue et de butée (18) et/ou au niveau du manchon (11) un joint d'étanchéité (38) supplémentaire séparé de la protection anti-glissement (16) est prévu.

13. Manchon selon l'une des revendications précédentes, **caractérisé en ce que** le corps de base d'enveloppe (20) est disposé de manière fixe au niveau de la section tubulaire de manchon (45) ou le corps de base d'enveloppe (20) est réalisé en plusieurs parties, et se compose d'un corps de base (46) disposé de manière fixe au niveau de la section tubulaire de manchon (45) et d'une extension d'enveloppe de manchon (40), et l'extension d'enveloppe de manchon (40) peut être reliée de manière fixe au corps de base (46) dans la position fonctionnelle.

14. Système pour la liaison amovible d'un tuyau (10) à un manchon (11) selon l'une des revendications précédentes, dans lequel le tuyau (10) est inséré dans le manchon (11), une protection anti-glissement (16) pour l'installation du tuyau (10) dans le manchon (11) se trouve entre le tuyau (10) et le manchon (11), et la protection anti-glissement (16) est retenue dans le manchon (11) par le biais d'au moins deux segments de bague de retenue et de butée (28a, 28b).
